# FASCICULE DE BREVET EUROPEEN

(11) **EP 2 225 190 B1**
(45) Date de publication et mention de la délivrance du brevet: **15.02.2012**
(21) Numéro de dépôt: 08868557.3
(22) Date de dépôt: 30.12.2008
(51) Int. Cl.: C05G 3/08

(54) **COMPOSITION INHIBITRICE D'UREASE ET DE NITRIFICATION**
ZUSAMMENSETZUNG ZUR UREASE- UND NITRIFIZIERUNGSHEMMUNG
COMPOSITION FOR INHIBITING UREASE AND NITRIFICATION

(30) Priorité: 31.12.2007 FR 0760455
(43) Date de publication de la demande: 08.09.2010
(73) Titulaire: Timac Agro International, 35400 Saint Malo (FR)
(72) Inventeur: URRUTIA, Oscar, E-31008 Pamplona (ES); SAN FRANCISCO, Sara, E-31111 Noain (ES); GARCIA-MINA, Josemaria, E-31170 Iza (ES); YVIN, Jean-Claude, F-35400 Saint Malo (FR)
(74) Mandataire: Hubert, Philippe
(86) Numéro de dépôt international: PCT/FR2008/052432
(87) Numéro de publication internationale: WO 2009/083701

(56) Documents cités:
- EP-A- 0 945 066
- WO-A-01/72665
- WO-A-2005/075602
- WO-A-2007/144694
- DE-A1- 10 317 895
- ES-A1- 2 264 386
- GB-A- 1 465 533
- US-A- 4 517 007
- US-B1- 6 336 949

## Description

La présente invention a pour objet une nouvelle composition inhibitrice d'uréase et de nitrification, contenant une huile essentielle d'Allium ainsi que son utilisation pour la préparation de fertilisants à base d'urée.

L'invention trouve notamment application dans le domaine agricole.

L'azote est l'un des trois éléments fertilisants essentiels des plantes.

De ce fait, de nombreux composés chimiques contenant de l'azote ont été utilisés comme engrais. Parmi ces composés, l'urée, qui contient environ 45 % en poids d'azote, est l'un des plus utilisés actuellement au monde.

Cependant, les compositions fertilisantes à base d'urée peuvent perdre une quantité significative de leur azote lorsqu'elles sont appliquées sur un sol. En effet, à la surface du sol, l'urée est transformée en ammoniac qui est une forme volatile de l'azote et ce phénomène est notamment accéléré par hydrolyse de l'urée sous l'action de l'enzyme uréase. En outre, une partie de l'ammoniac ainsi formée est transformée en ammonium puis en nitrite et en nitrate (NO₃), ce qui conduit également à des pertes d'azote par dénitrification ou lessivage.

Ainsi, pour augmenter l'efficacité de l'urée en tant que fertilisant, il a été proposé de l'associer à des composés capables d'inhiber l'uréase et le phénomène de nitrification.

Parmi les différents inhibiteurs d'uréase connus, les phosphoramides et, en particulier, le N-(n-butyl)thiophosphorique triamide (NBPT) se sont avérés particulièrement efficaces.

L'utilisation commerciale des phosphoramides dans des compositions fertilisantes s'est heurtée à la difficulté de mettre au point des formulations stables pouvant être stockées avant leur application sur le sol.

Pour surmonter cette difficulté, il a été proposé, notamment dans le brevet US 5 698 003, d'associer ces inhibiteurs d'uréase de type phosphoramide à un système solvant comme en particulier un glycol ou un dérivé de glycol. Le brevet ES 2264 386 divulgue une composition comprenant un inhibiteur d'uréase de type phosphoramide et un extrait de mimosa.

Cependant, l'utilisation de compositions fertilisantes comprenant un tel système solvant n'est pas entièrement satisfaisante :
- d'une part, en termes d'efficacité vis-à-vis des phénomènes de perte d'azote mentionnés précédemment ; et
- d'autre part, en raison de leur incidence relativement néfaste sur l'environnement et de l'induction de problèmes de phytotoxicité comme décrits par Krogmeier et al dans Proc.Natl.Acad.Sci , vol 86 , en 1989.

Dans ces conditions, la présente invention a pour but de résoudre le problème technique consistant en la fourniture d'une nouvelle composition fertilisante à base d'urée contenant un phosphoramide en tant qu'inhibiteur d'uréase et qui présente une efficacité améliorée vis-à-vis des compositions de l'état de la technique tout en étant plus respectueuse de l'environnement et moins phytotoxique.

Il a été découvert, et ceci constitue le fondement de la présente invention que l'huile essentielle d'Allium constitue un solvant particulièrement avantageux des inhibiteurs d'uréase de type phosphoramide qui permet de résoudre ce problème technique de façon satisfaisante à l'échelle industrielle et agronomique, dans la mesure où :
- elle potentialise l'activité des phosphoramides notamment en conduisant à une plus grande réduction de la transformation de l'urée en ammoniac et en évitant des pertes d'azote par dénitrification ;
- elle protège l'inhibiteur d'uréase contre les phénomènes de dégradation chimique et/ou biologique ; et
- elle permet l'obtention de compositions plus respectueuses de l'environnement en raison de son caractère naturel.

Ainsi, selon un premier aspect, la présente invention a pour objet une composition inhibitrice d'uréase qui comprend au moins un composé inhibiteur d'uréase de type phosphoramide associé à une huile essentielle d'Allium.

L'huile essentielle d'Allium utilisée dans le cadre de la présente invention peut être obtenue par des méthodes d'extraction connues en soi à partir de différentes espèces de plantes monocotylédones de la famille des Alliacées, comme en particulier *Allium Sativum, Allium ascalonicum, Allium moly, Allium neapolitanum, Allium roseum, Allium scorodoprasum, Allium sphaerocephalon, Allium tricoccum, Allium triquetru, Allium tuncelianum, Allium ursinum, Allium victoralis, Allium vineale.*

De façon préférentielle, on utilisera une huile essentielle *d'Allium sativum* communément connue sous le nom d'ail.

Selon un premier mode de réalisation, cette composition selon l'invention se présente sous forme liquide, le composé inhibiteur d'uréase étant dissous dans un système solvant comprenant ladite huile essentielle d'Allium et éventuellement un ou plusieurs co-solvants.

Cette composition liquide peut en outre comprendre un (ou plusieurs) tensioactif(s).

Le co-solvant peut être de nature variée et sera notamment choisi parmi les solvants les plus respectueux de l'environnement.

A titre de co-solvant, on utilisera par exemple un composé choisi parmi les esters méthyliques et autres dérivés d'huiles végétales, les siloxanes et leurs dérivés, les pyrrolidones, les alkyles pyrrolidones, les mono, di, ou triéthanolamines et de façon préférentielle la triéthanolamine.

Le co- solvant pourra représenter jusqu'à 50% en poids et de préférence jusqu'à 30% en poids du poids du système solvant.

De même, le tensioactif peut être de nature variée et sera notamment choisi parmi les tensioactifs les plus respectueux de l'environnement.

A titre de tensioactif, on utilisera par exemple un tensioactif non ionique , ionique ou zwittérionique , en particulier un tensioactif choisi parmi les alkylesters sulfonates, les alkylsulfates, les alkylamides sulfates, les sels d'acides gras saturés ou insaturés et/ou leurs dérivés alcoxylés, les alkylsulfonates primaires ou secondaires, les alkylsuccinamates, les alkylsulfosuccinates, les monoesters ou diesters de sulfosuccinates, les sulfates d'alkylglycosides, les sophorolipides. les alkylphénols alcoxylés, les alcools aliphatiques , les acides gras alcoxylés , les amides d'acides gras alcoxylés , les amines alcoxylés , les amidoamines alcoxylés , les oxydes d'amines, les alkylpolyglycosides.

Le tensioactif pourra représenter jusqu'à 10% en poids et de préférence jusqu'à 5% en poids du poids du système solvant.

D'une façon générale, le composé inhibiteur d'uréase utilisé dans le cadre de la présente invention est un composé de type phosphoramide. De préférence, on utilisera le N-(n-butyl)thiophosphorique triamide (NBPT) seul ou en mélange avec un ou plusieurs autres composés inhibiteurs d'uréase connus.

Les proportions relatives de composé(s) inhibiteur(s) d'uréase et de système solvant peuvent varier dans de larges limites.

D'une façon générale, une composition liquide selon l'invention comprend :
- de 0,01 à 50 parties en poids, de préférence de 10 à 40 parties en poids, d'un composé inhibiteur d'uréase ;
- de 50 à 99,99 parties en poids, de préférence de 40 à 90 parties en poids, d'un système solvant à base d'huile essentielle d'ail,
le rapport pondéral entre le composé inhibiteur d'uréase et le système solvant étant de préférence compris entre 1:1 et 1:10, de préférence entre 1:2 et 1:5 .

Avantageusement, le pH d'une composition liquide selon l'invention sera compris entre 8 et 12, de préférence encore entre 9 et 10. Le cas échéant, un agent permettant d'ajuster le pH dans ces plages de valeurs sera ajouté à la composition. Un tel agent peut être par exemple l'hydroxyde de potassium ou l'hydroxyde de sodium.

Une composition liquide selon l'invention peut être préparée par simple mélange, de préférence sous agitation continue, des différents constituants dans un réacteur.

Ce mélange peut être réalisé dans des conditions de pression et de température variées. Avantageusement, ce mélange sera réalisé à une température comprise entre 25 et 60°C sous pression atmosphérique.

Selon une variante de réalisation actuellement préférée, une composition liquide selon l'invention peut être préparée :
- en mélangeant, le cas échéant, l'huile essentielle d'Allium et un co-solvant et/ou un tensioactif ;
- en ajoutant à l'huile essentielle d'Allium ou au système solvant ainsi constitué un ou plusieurs inhibiteurs d'uréase ;
- en maintenant le milieu réactionnel sous agitation pendant une durée suffisante pour permettre la dissolution du composé inhibiteur d'uréase dans ledit système solvant ;
- en ajustant, le cas échéant, le pH à une valeur comprise entre 8 et 12, de préférence entre 9 et 10, par exemple par l'ajout d'hydroxyde de potassium ou d'hydroxyde de sodium au milieu réactionnel.

Selon un deuxième mode de réalisation, la composition inhibitrice d'uréase selon l'invention se présente sous forme solide et comprend un support solide sur lequel est absorbé une composition liquide telle que décrite précédemment.

Différents types de supports solides peuvent être utilisés.

Par le terme "support", on désigne une matière organique ou minérale, naturelle ou synthétique dont l'association avec la composition inhibitrice d'uréase selon l'invention permet de faciliter son application sur le sol ou sur la plante.

Ce support est donc généralement inerte et il doit être acceptable en agriculture. Parmi les supports solides l'on citera, en particulier, les supports de type argile comme la sépiolite, la zéolite, l'attapulgite ; les silicates naturels ou synthétiques ; la silice amorphe ; des cires ; les résines synthétiques, de préférence biodégradables telles qu'en particulier les polyacrylamides ; ainsi que les matières organiques naturelles absorbantes, comme par exemple la léonardite ou la tourbe.

Une telle composition solide selon l'invention peut être préparée par tout procédé permettant au support solide d'absorber la composition liquide décrite précédemment.

Un tel procédé pourra comprendre, par exemple, une étape consistant à soumettre les matières premières éventuellement associées à des charges minérales comme par exemple du calcium marin ou lithothamne, de la dolomite, du sulfate de calcium, du phosphate naturel, du chlorure de potassium à un traitement de granulation par malaxage mettant en oeuvre une composition liquide selon l'invention telle que décrite précédemment.

Les compositions liquides ou solides qui viennent d'être décrites peuvent être utilisées par application directe sur un sol notamment pour inhiber la transformation d'urée en ammoniac ou la transformation d'ammoniac en nitrate.

Ainsi, selon un second aspect, la présente invention a pour objet l'utilisation d'une composition comprenant au moins un composé inhibiteur d'uréase de type phosphoramide associé à une huile essentielle d'Allium telle que décrite précédemment, pour inhiber la transformation d'urée en ammoniac ou la transformation d'ammoniac en nitrate.

Dans cette application, les compositions inhibitrices d'uréase selon l'invention pourront être utilisées en une quantité généralement comprise entre 1 et 30 kg/ha, de préférence en une quantité comprise entre 5 et 10 kg/ha correspondant à une quantité de composé(s) inhibiteur(s) d'uréase respectivement comprise entre 0,25 et 5 kg/ha, de préférence entre 1,25 et 2,5 kg/ha.

Les compositions liquides et solides qui viennent d'être décrites peuvent être également utilisées en association avec un engrais à base d'urée pour la réalisation de compositions fertilisantes.

Ainsi, selon un troisième aspect, la présente invention a pour objet une composition fertilisante qui comprend :
- un engrais à base d'urée ;
- une composition à usage agricole telle que décrite précédemment.

Dans ces compositions fertilisantes, l'engrais à base d'urée se présente de préférence sous forme solide, avantageusement sous forme de granulés. Bien entendu, l'engrais à base d'urée peut également se présenter sous forme liquide. De tels engrais à base d'urée sont bien connus dans le domaine agricole.

La composition associant le composé inhibiteur d'uréase de type phosphoramide et l'huile essentielle d'Allium, avantageusement choisie comme provenant d'Allium sativum, peut être ajoutée à l'engrais à base d'urée, soit sous forme solide, par exemple par simple mélange lorsque l'engrais est lui-même sous forme solide, soit sous forme liquide, par exemple par simple mélange lorsque l'engrais est lui-même sous forme liquide, ou encore par pulvérisation ou granulation lorsque l'engrais est lui-même sous forme solide.

Dans cette application, la composition inhibitrice d'uréase sera généralement utilisée en une quantité comprise entre 1 et 10 kg, de préférence entre 3 et 6 kg par tonne d'engrais à base d'urée, correspondant à une quantité de composé(s) inhibiteur(s) d'uréase comprise entre 0,25 et 2,5 kg/ha, de préférence entre 0,75 et 1,5 kg/ha.

Les exemples non limitatifs suivants illustreront la présente invention.

Dans ces exemples, l'abréviation suivante est utilisée :
N BPT : N-(N-butyl)thiophosphorique triamide.

### EXEMPLE 1: Préparation d'une composition inhibitrice d'uréase selon l'invention

Dans un réacteur muni d'une agitation continue, on introduit :
- 749 g d'huile essentielle d'ail ;
- 250 g de NBPT ;
- 1 g d'hydroxyde de sodium.

Le milieu réactionnel est maintenu sous agitation continue à 25°C et sous pression atmosphérique jusqu'à dissolution totale du NBPT.

On obtient ainsi une composition liquide stable (c'est-à-dire qui ne précipite pas et dans laquelle la concentration en composé inhibiteur d'uréase est constante).

### EXEMPLE 2 : Préparation d'une composition inhibitrice d'uréase selon l'invention

Dans un réacteur muni d'une agitation continue, on introduit :
- 380 g d'huile essentielle d'ail ;
- 250 g de NBPT ;
- 370 g de triéthanolamine.

Le milieu réactionnel est maintenu sous agitation continue à 25°C et sous pression atmosphérique jusqu'à dissolution totale du NBPT.

On obtient ainsi une composition liquide stable (c'est-à-dire qui ne précipite pas et dans laquelle la concentration en composé inhibiteur d'uréase est constante).

### EXEMPLE 3 : Préparation d'une composition fertilisante selon l'invention

Dans cet exemple, on utilise un engrais à base d'urée se présentant sous forme de granulés.

Une composition inhibitrice d'uréase selon l'exemple 1 ou 2 est pulvérisée sur l'engrais précité de préférence à l'issue du processus de granulation de l'urée réalisée , par exemple comme décrit dans le Fertilizer Manual , Klewer Academic Publisher ,1998 ,pages 259 à 268. Dans cet exemple, on a ainsi mélangé :
- 1 000 kg d'urée
- 5 kg d'une formulation selon l'exemple 1 ou 2.

Le produit ainsi obtenu se présente sous forme de granulés enrobés par la composition inhibitrice d'uréase.

### MISE EN EVIDENCE DES EFFETS DES COMPOSITIONS SELON L'INVENTION

Afin de mettre en évidence les effets avantageux des compositions inhibitrices d'uréase conformes à l'invention, on a comparé le taux de transformation d'urée en ammoniac obtenu après traitement d'un sol :
- d'une part, par une composition commerciale à base de NBPT ; et
- d'autre part, par une composition selon l'exemple 2.

Dans les deux cas, le sol a été préalablement traité par un engrais à base d'urée et une matière organique (paille de blé) a été répandue en une quantité d'environ 0,1 % rapportée à la quantité de sol traité à la surface du sol afin de placer celui-ci dans les conditions maximales de "volatilisation" de l'azote.

A titre de comparaison, on a également mesuré le taux de transformation de l'urée en ammoniac après le seul pré-traitement par l'engrais à base d'urée.

Le taux de transformation (pourcentage de volatilisation) de l'urée en ammoniac a été mesuré conformément à la méthode décrite dans le document suivant : Zhengping, W.; Van Cleemput, O.; Demeyer, P.; Baert, L. Effect of urease inhibitors on urea hydrolysis and ammonia volatilization. Biol. Fert. Soils 1991, 11, 43-47.

Les expériences ont été réalisées dans des flacons de 250 ml contenant 100 g de sol calcaire incorporant 20 % de sable (2 à 3 mm) et en y ajoutant une quantité d'engrais équivalente à 0,0874 g d'azote.

Les compositions inhibitrices d'uréase testées ont été appliquées par pulvérisation en une quantité correspondant à 0,5 % en poids de NBPT rapporté au poids d'urée.

Les concentrations en urée et en ammonium dans le sol ont été mesurées en utilisant la méthode décrite dans Zhengping, W. ; Van Cleemput, O. ; Demeyer, P.; Baert, L. Effect of urease inhibitors on urea hydrolysis and ammonia volatilization. Biol. Fert. Soils 1991, 11, 43-47.

Les résultats obtenus après une durée de 28 jours ont été regroupés dans le tableau I ci-après.

**TABLEAU I**

| Composition testée | Urée transformée | |
|---|---|---|
| | en mg d'azote/pot | en % |
| Urée seul | 50,55 | 56,61 |
| NBPT commercial | 33,30 | 37,29 |
| Exemple 2 | 27,37 | 30,65 |
| | | |
| Composition testée | Teneur en urée dans le sol | |
| | en mg d'azote/pot | en % |
| Urée seul | 42,28 | 100 |
| NBPT commercial | 57,96 | 137 |
| Exemple 2 | 64 | 152 |
| | | |
| Composition testée | Teneur en ammonium dans le sol | |
| | en mg NH4/pot | en % |
| Urée seul | 3,61 | 100 |
| NBPT commercial | 5 | 138 |
| Exemple 2 | 9,45 | 259 |

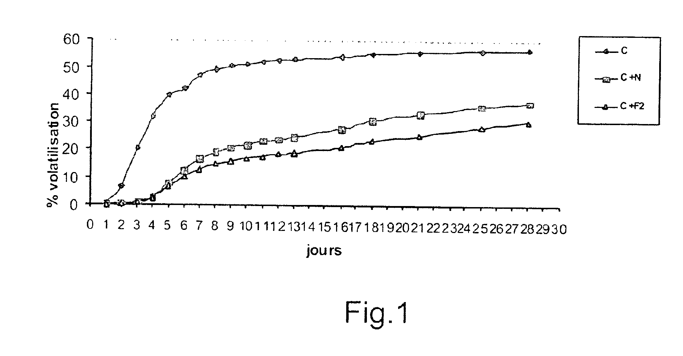

Par ailleurs, on a représenté à la figure 1 le pourcentage de volatilisation en fonction du temps.

Dans cette figure :
- la courbe C correspond aux résultats obtenus avec l'urée seule ;
- la courbe C+N correspond aux résultats obtenus avec l'urée en association avec le NBPT commercial ;
- la courbe C+F2 correspond aux résultats obtenus avec la composition selon l'exemple 2.

Les résultats ainsi obtenus montrent qu'une composition inhibitrice d'uréase conforme à l'invention potentialise de façon significative (environ 17,8 %) l'effet du NBPT sur la volatilisation de l'urée.

De même, ces résultats montrent qu'une formulation selon l'invention permet d'augmenter d'une façon très significative la teneur en ammonium dans le sol aussi bien par comparaison avec l'urée seul (gain d'environ 159 %) que par comparaison avec une composition commerciale de NBPT (gain d'environ 38 %).

Il en résulte que l'huile essentielle d'allium constitue bien un solvant particulièrement avantageux pour les inhibiteurs d'uréase de type phosphoramide et en particulier pour le NBPT.

## Revendications

1. Composition inhibitrice d'uréase et de nitrification, **caractérisée en ce qu'**elle comprend au moins un composé inhibiteur d'uréase de type phosphoramide associé à une huile essentielle d'Allium.

2. Composition selon la revendication 1, **caractérisée en ce que** l'huile essentielle d'Allium est choisie parmi les huiles essentielles obtenues à partir de différentes espèces de plantes monocotylédones de la famille des Alliacées, comme en particulier *Allium Sativum, Allium ascalonicum, Allium moly, Allium neapolitanum, Allium roseum, Allium scorodoprasum, Allium sphaerocephalon, Allium tricoccum, Allium triquetru, Allium tuncelianum, Allium ursinum, Allium victoralis, Allium vineale.*

3. Composition selon la revendication 2, **caractérisée en ce que** l'huile essentielle d'Allium est obtenue à partir *d'Allium Sativum* communément connu sous le nom d'ail.

4. Composition selon l'une des revendications 1 à 3, **caractérisée en ce qu'**elle se présente sous forme liquide, ledit composé inhibiteur d'uréase étant dissous dans un système solvant comprenant ladite huile essentielle d'Allium et éventuellement un co-solvant.

5. Composition selon la revendication 4, **caractérisée en ce que** le co-solvant précité est choisi parmi les esters méthyliques et autres dérivés d'huiles végétales, les siloxanes et leurs dérivés, les pyrrolidones, les alkyles pyrrolidones, les mono, di, ou triéthanolamines.

6. Composition selon la revendication 5, **caractérisée en ce que** le co-solvant précité est la triéthanolamine.

7. Composition selon l'une des revendications 1 à 6, **caractérisée en ce que** le composé inhibiteur d'uréase précité est le NBPT.

8. Composition selon l'une des revendications 5 à 7, **caractérisée en ce qu'**elle comprend :
- de 0.01 à 50 parties en poids d'un composé inhibiteur d'uréase ;
- de 50 à 99,99 parties en poids dudit système solvant à base d'huile essentielle d'Allium.

9. Composition selon l'une des revendications 1 à 3, **caractérisée en ce qu'**elle se présente sous forme solide et comprend un support solide sur lequel est absorbée une composition liquide selon l'une des revendications 4 à 8.

10. Composition selon la revendication 9, caractérisée ce que le support solide précité est choisi dans le groupe comprenant les supports de type argile comme la sépiolite, la zéolite, l'attapulgite ; les silicates naturels ou synthétiques ; la silice amorphe ; des cires ; les résines synthétiques, de préférence biodégradables telles qu'en particulier les polyacrylamides ; ainsi que les matières organiques naturelles absorbantes, comme par exemple la léonardite ou la tourbe.

11. Utilisation d'une composition selon l'une des revendications 1 à 10, pour inhiber la transformation d'urée en ammoniac ou la transformation d'ammoniac en nitrate.

12. Utilisation selon la revendication 11, **caractérisée en ce que** la composition précitée est appliquée en une quantité comprise entre 1 et 30 kg/ha, de préférence en une quantité comprise entre 5 et 10 kg/ha.

13. Composition fertilisante, **caractérisée en ce qu'**elle comprend :
- un engrais à base d'urée
- une composition selon l'une des revendications 1 à 10.

## Claims

1. A composition which inhibits urease and nitrification, **characterized in that** it comprises at least one urease-inhibiting compound of the phosphoramide type in combination with an Allium essential oil.

2. The composition as claimed in claim 1, **characterized in that** the Allium essential oil is chosen from the essential oils obtained from different species of monocotyledonous plants of the Alliaceae family, such as, in particular, *Allium sativum, Allium ascalonicum, Allium moly, Allium neapolitanum, Allium roseum, Allium scorodoprasum, Allium sphaerocephalon, Allium tricoccum, Allium triquetru, Allium tuncelianum, Allium ursinum, Allium victoralis or Allium vineale.*

3. The composition as claimed in claim 2, **characterized in that** the Allium essential oil is obtained from *Allium sativum,* commonly known under the name of garlic.

4. The composition as claimed in any one of claims 1 to 3, **characterized in that** it is provided in the liquid form, said urease-inhibiting compound being dissolved in a solvent system comprising said Allium essential oil and optionally a cosolvent.

5. The composition as claimed in claim 4, **characterized in that** the above-mentioned cosolvent is chosen from methyl esters and other derivatives of vegetable oils, siloxanes and their derivatives, pyrrolidones, alkylpyrrolidones or mono-, di- or triethanolamines.

6. The composition as claimed in claim 5, **characterized in that** the abovementioned cosolvent is triethanolamine.

7. The composition as claimed in any one of claims 1 to 6, **characterized in that** the abovementioned urease-inhibiting compound is NBPT.

8. The composition as claimed in any one of claims 5 to 7, **characterized in that** it comprises:
- from 0.01 to 50 parts by weight of a urease-inhibiting compound;
- from 50 to 99.99 parts by weight of said Allium essential oil-based solvent system.

9. The composition as claimed in any one of claims 1 to 3, **characterized in that** it is provided in the solid form and comprises a solid support on which a liquid composition as claimed in one of claims 4 to 8 is absorbed.

10. The composition as claimed in claim 9, **characterized in that** the above-mentioned solid support is chosen from the group consisting of clay type supports, such as sepiolite, zeolite or attapulgite; natural or synthetic silicates; amorphous silica; waxes; synthetic resins, preferably biodegradable synthetic resins, such as in particular polyacrylamides; and absorbent natural organic substances, such as, for example, leonardite or peat.

11. The use of a composition as claimed in any one of claims 1 to 10 for inhibiting the conversion of urea into ammonia or the conversion of ammonia into nitrate.

12. The use as claimed in claim 11, **characterized in that** the above-mentioned composition is applied in an amount of between 1 and 30 kg/ha, preferably in an amount of between 5 and 10 kg/ha.

13. A fertilizing composition, **characterized in that** it comprises:
- a urea-based fertilizer
- a composition as claimed in any one of claims 1 to 10.

## Patentansprüche

1. Urease- und nitrifikationshemmende Zusammensetzung, **dadurch gekennzeichnet, daß** sie wenigstens eine ureasehemmende Verbindung vom Typ Phosphoramid umfaßt, die mit einem ätherischen Alliumöl kombiniert ist.

2. Zusammensetzung nach Anspruch 1, **dadurch gekennzeichnet, daß** das ätherische Alliumöl aus den ätherischen Ölen ausgewählt ist, welche aus unterschiedlichen einkeimblättrigen Pflanzenarten aus der Familie der Alliaceae, wie insbesondere Allium sativum, Allium ascalonicum, Allium moly, Allium neapolitanum, Allium roseum, Allium scorodoprasum, Allium sphaerocephalon, Allium tricoccum, Allium triquetrum, Allium tuncelianum, Allium ursinum, Allium victoralis, Allium vineale gewonnen sind.

3. Zusammensetzung nach Anspruch 2, **dadurch gekennzeichnet, daß** das ätherische Alliumöl aus Allium sativum, gemeinhin unter dem Namen Knoblauch bekannt, gewonnen ist.

4. Zusammensetzung nach einem der Ansprüche 1 bis 3, **dadurch gekennzeichnet, daß** sie in flüssiger Form vorliegt, wobei die ureasehemmende Verbindung in einem Lösungsmittelsystem, das das ätherische Alliumöl und eventuell ein Co-Lösungsmittel umfaßt, gelöst ist.

5. Zusammensetzung nach Anspruch 4, **dadurch gekennzeichnet, daß** das vorgenannte Co-Lösungsmittel aus den Methylestern und anderen Derivaten von Pflanzenölen, den Siloxanen und ihren Derivaten, den Pyrrolidonen, den Alkylpyrrolidonen, den Mono-, Di- oder Triethanolaminen ausgewählt ist.

6. Zusammensetzung nach Anspruch 5, **dadurch gekennzeichnet, daß** das vorgenannte Co-Lösungsmittel Triethanolamin ist.

7. Zusammensetzung nach einem der Ansprüche 1 bis 6, **dadurch gekennzeichnet, daß** die vorgenannte ureasehemmende Verbindung NBPT ist.

8. Zusammensetzung nach einem der Ansprüche 5 bis 7, **dadurch gekennzeichnet, daß** sie umfaßt:
- 0,01 bis 50 Gewichtsteile einer ureasehemmenden Verbindung,
- 50 bis 99,99 Gewichtsteile des Lösungsmittelsystems auf Basis eines ätherischen Alliumöls.

9. Zusammensetzung nach einem der Ansprüche 1 bis 3, **dadurch gekennzeichnet, daß** sie in fester Form vorliegt und einen festen Träger umfaßt, auf dem eine flüssige Zusammensetzung nach einem der Ansprüche 4 bis 8 absorbiert ist.

10. Zusammensetzung nach Anspruch 9, **dadurch gekennzeichnet, daß** der vorgenannte feste Träger aus der Gruppe umfassend tonartige Träger, wie Sepiolith, Zeolith, Attapulgit; natürliche oder synthetische Silikate; amorphe Kieselsäure; Wachse; synthetische Harze, vorzugsweise biologisch abbaubare, wie insbesondere Polyacrylamide, sowie absorbierende, natürliche organische Materialien, wie zum Beispiel Leonardit oder Torf ausgewählt ist.

11. Verwendung einer Zusammensetzung nach einem der Ansprüche 1 bis 10, um die Umwandlung von Harnstoff in Ammoniak oder die Umwandlung von Ammoniak in Nitrat zu hemmen.

12. Verwendung nach Anspruch 11, **dadurch gekennzeichnet, daß** die vorgenannte Zusammensetzung in einer Menge zwischen 1 und 30 kg/ha, vorzugsweise in einer Menge zwischen 5 und 10 kg/ha angewandt wird.

13. Düngezusammensetzung, **dadurch gekennzeichnet, daß** sie umfaßt:
- einen Dünger auf Harnstoffbasis,
- eine Zusammensetzung nach einem der Ansprüche 1 bis 10.
